# EUROPÄISCHE PATENTSCHRIFT

(11) **EP 1 332 306 B1**
(45) Veröffentlichungstag und Bekanntmachung des Hinweises auf die Patenterteilung: **02.08.2006**
(21) Anmeldenummer: 01992854.8
(22) Anmeldetag: 30.10.2001
(51) Int. Cl.: F16K 31/528

(54) **DREHVERSTELLVORRICHTUNG**
ROTATING REGULATING DEVICE
DISPOSITIF DE REGLAGE A ROTATION

(30) Priorität: 30.10.2000 DE 20018548 U
(43) Veröffentlichungstag der Anmeldung: 06.08.2003
(73) Patentinhaber: Cooper Cameron Corporation, Houston, Texas 77027-9109 (US)
(72) Erfinder: BIESTER, Klaus, 29342 Wienhausen (DE); LENZ, Norbert, 29229 Celle (DE)
(74) Vertreter: Hilgers, Hans Hubert
(86) Internationale Anmeldenummer: PCT/EP2001/012554
(87) Internationale Veröffentlichungsnummer: WO 2002/037008

(56) Entgegenhaltungen:
- EP-A- 0 050 466
- EP-A- 0 622 574
- DE-A- 19 528 081
- GB-A- 1 001 629
- NL-C- 112 253
- US-A- 2 953 344
- US-A- 4 565 213
- US-A- 6 007 047

## Beschreibung

Die Erfindung betrifft eine Drehverstellvorrichtung, insbesondere für einen verschwenkbaren oder verdrehbaren Ventilkörper aufweisende Ventile, mit zumindest einer Betätigungseinrichtung zum Verdrehen eines mit dem Ventilkörper bewegungsverbindbaren Verstellelements.

Eine solche Drehverstellvorrichtung ist beispielsweise aus der Praxis für verschiedene Ventile auf dem Gebiet der Erdölförderung bekannt. Solche Ventile weisen einen kugelförmigen oder scheibenförmigen Ventilkörper auf, der in einer Ventilbohrung verschwenkbar oder verdrehbar gelagert ist. Je nach Stellung des Ventilkörpers kann mehr oder weniger Fluid durch die Ventilbohrung hindurchtreten. Der entsprechende Ventilkörper ist beispielsweise an einer Stelle seines Umfangs mit einem Drehbolzen verbunden, der drehbar in Ventilgehäuse gelagert ist. Mit diesem Drehbolzen als Verstellelement ist bei manuell betätigten Ventilen beispielsweise ein Betätigungshebel oder ein Betätigungsrad als Betätigungseinrichtung bewegungsverbunden.

Solche manuellen Drehverstellvorrichtungen für Ventile sind insbesondere dann von Nachteil, wenn sie unterhalb des Meeresspiegels angeordnet sind. Die Betätigung einer solchen Drehverstellvorrichtung ist dann nur schwer durchzuführen und erfordert einen erheblichen personellen und zeitlichen Aufwand. Außerdem ist bei diesen manuellen Drehverstellvorrichtungen die tatsächliche Stellung des Ventilkörpers nur unzureichend und schlecht reproduzierbar feststellbar bzw. einstellbar.

Eine derartige Drehverstellvorrichtung ist aus dem Dokument NL 112253 bekannt.

Der Erfindung liegt daher die Aufgabe zugrunde, eine Drehverstellvorrichtung der eingangs genannten Art dahingehend zu verbessern, dass diese genau und reproduzierbar sowie insbesondere automatisch betätigbar ist.

Diese Aufgabe wird durch den Merkmalen des Anspruchs 1 gelöst.

Das Getriebe ist mit einem entsprechenden Aktuator oder auch Stellmotor antriebsverbunden und setzt eine entsprechende Linearbewegung von Aktuator oder Stellmotor in eine Drehbewegung der Drehhülse als Verstellelement um. Die entsprechende Verdrehung der Drehhülse wird über die Bewegungsverbindung zum Ventilkörper in ein entsprechendes Verschwenken oder Verdrehen des Ventilkörpers und damit in ein entsprechendes Öffnen oder Schließen des Ventils umgesetzt.

Um eine solche Drehverstellvorrichtung in einfacher Weise mit üblichen Ventilen sowie üblichen Aktuatoren oder dergleichen einsetzen zu können, kann die Drehverstellvorrichtung als Einbaumodul ausgebildet sein. Dieses ist beispielsweise zwischen Aktuator und Ventil anflanschbar.

Bei der relativen Lagerung von Drehhülse und Lagerhülse kann die Drehhülse auf einer Außenfläche der Lagerhülse oder zumindest außerhalb der Lagerhülse verdrehbar gelagert sein. Bei einer weiteren Möglichkeit kann die Drehhülse innerhalb der Lagerhülse zumindest verdrehbar gelagert sein. Bei einer Anordnung innerhalb der Lagerhülse ist die Drehhülse von dieser geschützt und bedarf im Wesentlichen keiner eigenen Lagerung oder Befestigung außerhalb der Drehverstellvorrichtung.

Eine einfache Möglichkeit zur verdrehbaren Lagerung der Drehhülse in der Lagerhülse kann darin gesehen werden, dass zwischen diesen Kugel- und/oder Rollenlager angeordnet sind.

Um die Drehhülse relativ zur Lagerhülse zu verdrehen, können Drehhülse und Lagerhülse in ihren Umfangsflächen jeweils mindestens einen Führungsschlitz aufweisen, von denen einer im Wesentlichen gradlinig und der andere im Wesentlichen schräg zur Längsrichtung der Hülse verläuft, wobei mit beiden Schlitzen ein Eingriffselement des Getriebes in Eingriff ist. Bewegt sich dieses Eingriffselement entlang beider Schlitze, wird durch die schräge Ausrichtung der Führungsschlitze eine Bewegung des Eingriffselements in Längsrichtung beider Hülsen in entsprechend eine Drehbewegung der Drehhülse umgesetzt. Dabei kann der gradlinige oder schräg zur Längsrichtung verlaufende Führungsschlitz in der Drehhülse und entsprechend der jeweils andere Führungsschlitz in der Lagerhülse ausgebildet sein.

Es besteht die Möglichkeit, dass die Führungsschlitze in Drehhülse und Lagerhülse in gegenüberliegenden Umfangsflächen der Hülsen angeordnet sind. Das heißt, beispielsweise kann der Führungsschlitz in der Drehhülse auf einer Seite und der Führungsschlitz dazu gegenüberliegend in der Lagerhülse angeordnet sein.

Zur einfache herstellung und zuordnung der Führungsschlitze kann es allerdings als vorteilhaft betrachtet werden, wenn diese in Drehhülse und Lagerhülse in einander zuweisenden Umfangsflächen der Hülsen angeordnet sind, d.h. auf einer Seite der Längsrichtung.

Eine weitere Verbesserung der Drehbarkeit der Drehhülse relativ zur Lagerhülse kann sich dadurch ergeben, dass die Führungsschlitze paarweise in Drehhülse und Führungshülse ausgebildet sind, wobei sich jedes Paar von Führungsschlitzen der jeweiligen Hülse in der Umfangsfläche diametral gegenüberliegt.

Aus Gründen der vereinfachen Herstellung können die Führungsschlitze in Projektion auf die Längsrichtung der Hülsen im Wesentlichen gleich lang sein.

Eine verbesserte und erleichterte Drehbarkeit der Drehhülse kann sich dadurch ergeben, dass deren Führungsschlitze spiralförmig verlaufen, d.h. dass die schräg zur Längsrichtung verlaufenden Führungsschlitze in der Drehhülse ausgebildet sind.

Ein konstruktionstechnisch einfaches Eingriffselement kann darin gesehen werden, dass dieses ein quer zur Längsrichtung verlaufender Eingriffsbolzen ist.

Die Führungsschlitze können dahingehend vereinfacht ausgebildet sein, dass sie weiterhin die gleiche Breite aufweisen, so dass der Eingriffsbolzen an seinen beiden Endabschnitten mit den paarweise gegenüberliegenden Führungsschlitzen sowohl in Drehhülse als auch Lagerhülse in Eingriff ist.

Um nicht direkt den Eingriffsbolzen in den Führungsschlitze zu führen, kann der Eingriffsbolzen im Bereich der Führungsschlitze von Kugel- und/oder Rollenlagern umgeben sein.

Die Führungsschlitze sowie der Eingriffsbolzen bilden Teile des erfindungsgemäßen Getriebes. Um eine einfache Verstellung des Eingriffsbolzens in Längsrichtung der Hülsen und damit in Längsrichtung der Führungsschlitze zu ermöglichen, kann der Eingriffsbolzen im Wesentlichen in seinem Mittelabschnitt in einem Vorschubelement drehfest gehalten sein, welches entlang einer Längsbohrung der Drehhülse verschiebbar gelagert ist. Dieses Vorschubelement bildet einen weiteren Teil des Getriebes.

Um neben einer einfachen Verdrehung der Drehhülse relativ zum Vorschubelement gleichzeitig eine Führung der Drehhülse zu ermöglichen, können Vorschubelement und Längsbohrung einen zumindest teilweise kreisförmigen Querschnitt aufweisen. In diesem Zusammenhang ist es weiterhin günstig, wenn ein vollständig kreisförmiger Querschnitt insbesondere vom Vorschubelement nur in dem Bereich nicht vorliegt, wo dieses den Mittelabschnitt des Eingriffsbolzens hält.

Um das Vorschubelement und damit den Eingriffsbolzen in einfacher Weise in Längsrichtung der Hülsen zu verstellen, kann das Vorschubelement mit einem Betätigungselement einer Aktuatoreinrichtung lösbar verbunden sein. Eine solche Aktuatoreinrichtung ist beispielsweise aus der EP 1024422A1 bekannt. Durch eine solche Aktuatoreinrichtung ist elektrisch gesteuert das Betätigungselement relativ zu einem entsprechenden Aktuatorgehäuse aus- und einschiebbar. Durch die lösbare Verbindung von Betätigungselement und Vorschubelement wird die entsprechende Linearbewegung des Betätigungselements auf das Vorschubelement und damit auf den Eingriffsbolzen übertragen.

Um die modulartige Drehverstellvorrichtung in einfacher Weise an einer entsprechenden Aktuatoreinrichtung befestigen zu können, kann die Lagerhülse einen radial auswärts vorstehenden Ringflansch an zumindest einem Befestigungsende aufweisen, der mit einem Anschlussende der Aktuatoreinrichtung lösbar verbindbar ist.

Um die Drehverstellvorrichtung gegenüberliegend zum Ringflansch der Lagerhülse weitestgehend zu verschließen, ist gegenüberliegend zum Befestigungsende ein Abschlussring mit radial auswärts vorstehendem Ringflansch an der Lagerhülse lösbar befestigt.

Um in diesem Zusammenhang zwar eine Drehbarkeit der Drehhülse zu gewährleisten, diese aber axial weitestgehend zu fixieren, ist zwischen Drehhülse und Abschlussring wenigstens ein Axiallager zur axialen Fixierung der Drehhülse relativ zur Lagerhülse angeordnet.

Um eine entsprechende Lagerung der Drehhülse auch gegenüberliegend zum Abschlussring zu ermöglichen, kann wenigstens ein Axiallager zwischen Ringflansch der Lagerhülse und Drehhülse und/oder zwischen Anschlussende der Aktuatoreinrichtung und Drehhülse angeordnet sein.

Um eine Rückstellung der Drehhülse in ihre Ausgangsstellung zu unterstützen, kann der Eingriffsbolzen und/oder das Vorschubelement in Richtung Ringflansch der Lagerhülse kraftbeaufschlagt sein.

Eine solche Kraftbeaufschlagung kann in einfacher Weise dadurch erreicht werden, dass wenigstens ein Federelement in oder an der Drehverstellvorrichtung angeordnet ist.

Eine einfache Möglichkeit zur Anordnung des Federelements kann darin gesehen werden, dass dieses wirkungsmäßig zwischen Ringflansch und Eingriffsbolzen angeordnet ist. Dabei kann die Anordnung sowohl zwischen Ringflansch des Abschlussrings als auch Ringflansch der Lagerhülse und Eingriffsbolzen erfolgen. In dem einen Fall müsste die Feder als Druckfeder und im anderen Fall als Zugfeder ausgebildet sein.

Um die Feder in einfacher Weise beim Zusammenbau der Drehverstellvorrichtung anordnen zu können, kann eine Federlagerhülse in Längsrichtung verschiebbar auf der Lagerhülse aufgesteckt sein, in die Enden des Eingriffsbolzens eingreifen und die einen radial auswärts vorstehenden Randflansch aufweist, zwischen dem und dem Ringflansch des Abschlussrings eine Druckfeder als Federelement angeordnet ist.

Um in einfacher Weise eine Ausgangsstellung oder Endstellung der Federlagerhülse relativ zur Drehverstellvorrichtung festlegen zu können, kann der Randflansch in einer Endstellung der Federlagerhülse mit dem Ringflansch der Lagerhülse in Anlage sein.

Um die Federlagerhülse in einfacher Weise beim Zusammenbau der Drehverstellvorrichtung aufsetzen zu können, kann die Federlagerhülse zwei in Richtung Randflansch offene Längsschlitze aufweisen, in welche die Enden des Eingriffsbolzens eingreifen und welche Enden mit den dem Randflansch gegenüberliegenden Schlitzenden in Anlage sind.

Im Folgenden wird ein vorteilhaftes Ausführungsbeispiel der Erfindung anhand der in der Zeichnung beigefügten Figuren näher erläutert.

Es zeigen:
- Fig. 1: einen Längsschnitt durch ein Ausführungsbeispiel einer erfindungsgemäßen Drehverstellvorrichtung, welche mit einer Aktuatoreinrichtung lösbar verbunden ist;
- Fig. 2: eine vergrößerte Darstellung des in Fig. 1 dargestellten Ausführungsbeispiels der erfindungsgemäßen Drehverstellvorrichtung, und
- Fig. 3: einen Schnitt entlang der Linie III-III aus Fig. 2.

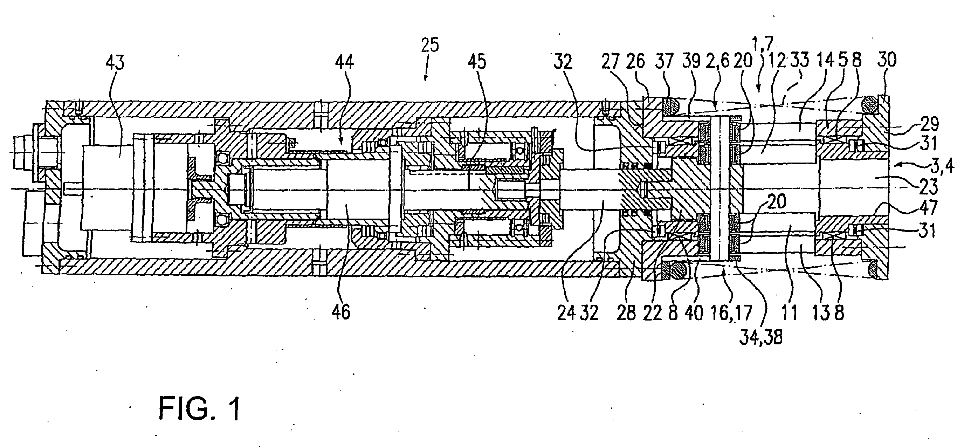

In Fig. 1 ist ein Längsschnitt durch eine erfindungsgemäße Drehverstellvorrichtung 1 dargestellt. Diese ist als Einbaumodul 7 ausgebildet und an einem Befestigungsende 27 einer Aktuatoreinrichtung 25 angeflanscht.

Die Aktuatoreinrichtung 25 umfasst zumindest einen Elektromotor 23. Dieser treibt einen Kugelgewindetrieb 44 an, wobei eine Kugelmutter 46 durch den Elektromotor 43 drehbar ist. Die Kugelmutter 46 ist zwar drehbar aber axial unverschieblich in der Aktuatoreinrichtung 25 gelagert. Durch Drehen der Kugelmutter 46 wird eine Kugelumlaufspindel 45 des Kugelgewindetriebs 44 in Längsrichtung der Aktuatoreinrichtung 25 verstellt. Ein mit der Kugelumlaufspindel 45 verbundenes Betätigungselement 24 wird entsprechend verstellt und somit ebenfalls ein Vorschubelement 22 der Drehverstellvorrichtung 1.

Das Vorschubelement 22 ist in einer Längsbohrung 23 einer Drehhülse 4 der Drehverstellvorrichtung 1 verschieblich gelagert. Die Drehhülse 4 ist mittels von Kugel- und/oder Rollenlager 8 im Inneren einer Lagerhülse 5 verdrehbar gelagert. Die Lagerhülse 5 ist an ihrem dem Anschlussende 28 der Aktuatoreinrichtung 25 zuweisenden Befestigungsende 27 an der Aktuatoreinrichtung 25 lösbar befestigt. Am Befestigungsende 27 weist die Lagerhülse 5 einen radial nach außen vorstehenden Ringflansch 26 auf. An ihrem dem Befestigungsende 27 gegenüberliegenden Ende ist die Lagerhülse 5 mit einem Abschlussring 29 verbunden. Dieser weist einen ebenfalls radial auswärts vorstehenden Ringflansch 30 auf.

Die Drehhülse 4 ist relativ zum mit der Lagerhülse 5 verbundenen Abschlussring 29 durch Axiallager 31 und ebenfalls am Anschlussende 28 der Aktuatoreinrichtung 25 durch Axiallager 32 drehbar aber axial unverschieblich gelagert.

Zur Übertragung der Bewegung des Betätigungselements 24 in linearer Richtung in eine Drehbewegung der Drehhülse 4 relativ zur Lagerhülse 5 ist zwischen beiden ein Getriebe 6 als Betätigungseinrichtung 2 angeordnet. Das Getriebe 6 umfasst das Vorschubelement 22, einen Eingriffsbolzen 17 als Eingriffselement 16, Kugel-/Rollenlager 20 sowie Führungsschlitze 11, 12 in der Drehhülse 4 sowie Führungsschlitze 13, 14 in der Lagerhülse 5.

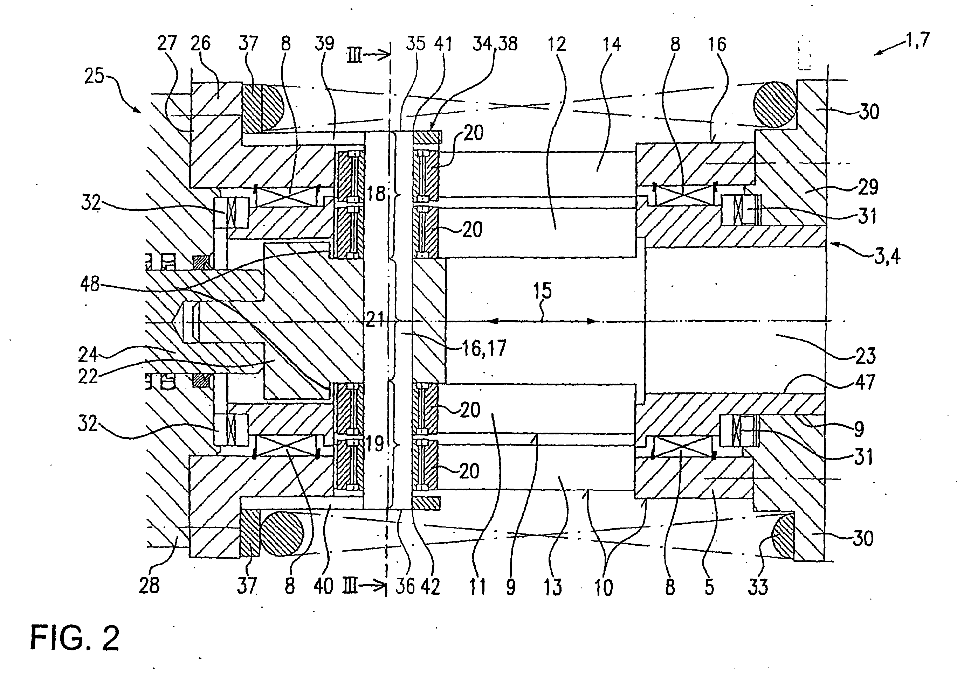

Ein Mittelabschnitt 21, siehe Fig. 2, des Eingriffsbolzens 17 ist in dem Vorschubelement 22 gehalten und aus dem Vorschubelement beidseitig vorstehende Endabschnitte 18, 19, siehe nochmals Fig. 2, sind mit den Kugel-/Rollenlagem 20 versehen. Diese Endabschnitte 18, 19 sind mit jeweils einem Kugel-/Rollenlager 20 in den verschiedenen Führungsschlitzen 11 bis 14 in Längsrichtung 15 der Drehverstellvorrichtung 1 verschieblich gelagert.

Die Führungsschlitze 13, 14 der Lagerhülse 5 verlaufen gradlinig in Längsrichtung 15, während die Führungsschlitze 11, 12 in der Drehhülse 4 schräg zur Längsrichtung 15 und insbesondere spiralförmig verlaufen.

Der Eingriffsbolzen 17 greift mit seinen äußersten Enden 35, 36, siehe auch Fig. 2, in Längsschlitze 39, 40 einer Federlagerhülse 34 ein. Diese Längsschlitze sind in Richtung Ringflansch 26 der Lagerhülse 5 offen. Im Bereich des Ringflansches 26 weist die Federlagerhülse 34 weiterhin einen radial auswärts vorstehenden Randflansch 37 auf, der in der in Fig. 1 dargestellten Endstellung 38 der Federlagerhülse 34 mit dem Ringflansch 26 in Anlage ist. Zwischen dem Randflansch 37 und dem Ringflansch 30 des Abschlussrings 29 ist eine Druckfeder als Federelement 33 angeordnet. Diese beaufschlagt entgegengesetzt zur Verstellrichtung des Betätigungselements 24 die Betätigungseinrichtung 2 der Drehverstellvorrichtung 1.

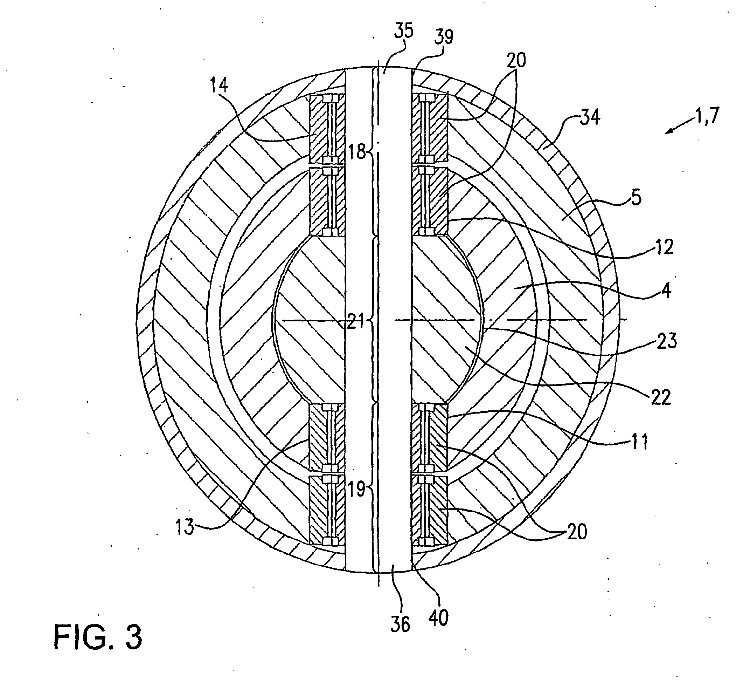

In Fig, 2 ist die Drehverstellvorrichtung 1 nach Fig. 1 vergrößert dargestellt. Gleiche Teile sind in dieser wie auch in Fig. 3 mit gleichen Bezugszeichen im Vergleich zu Fig. 1 versehen und werden nur noch teilweise erwähnt.

In Fig. 2 ist insbesondere erkennbar, dass Enden 35, 36 des Eingriffsbolzens 17 mit Schlitzenden 41, 42 der Längsschlitze 39, 40 in Anlage sind, wobei die Schlitzenden 41, 42 die Längsschlitze 39, 40 gegenüberliegend zum Randflansch 37 in der Federlagerhülse 34 begrenzen. Der Eingriffsbolzen 17 ist innerhalb der Führungsschlitze 11 bis 14 mit deren der Aktuatoreinrichtung 25 näherliegenden Enden in Anlage. Die Endabschnitte 18, 19 des Eingrifisbolzen 17 sind von den Kugel-/Rollenlagem 20 umgeben, die innerhalb der Führungsschlitze 11 bis 14 bei Verschieben des Eingriffsbolzens 17 in Längsrichtung 15 der Drehverstellvorrichtung 1 abrollen.

Die Führungsschlitze 11, 12 und 13, 14 weisen in Projektion auf die Längsrichtung 15 im Wesentlichen die gleiche Länge auf, wobei die Führungsschlitze 11, 12 spiralförmig und die Führungsschlitze 13, 14 linear verlaufen.

Der Mittelabschnitt 21 des Eingriffsbolzens 17 ist von dem Vorschubelement 22 umgriffen und in diesem drehfest gehalten. Das Vorschubelement 22 weist einen radial nach außen vorstehenden Absatz 48 auf, der teilweise die den Führungsschlitzen 11, 12 zugeordneten Kugel-/Rollenlager 20 überlappt. Durch Verschieben des Vorschubelements 22 in Richtung Abschlussring 29 mittels des Betätigungselements 24 der Aktuatoreinrichtung 25 ist der Eingriffsbolzen 17 als Eingriffselement 16 entlang der Führungsschlitze 11, 12 bis zu deren dem Abschlussring 29 zuweisenden Enden verschiebbar. Dabei verschiebt sich der Eingriffsbolzen 17 entlang der linearen Führungsschlitze 13, 14 der mit der Aktuatoreinrichtung 25 fest verbundenen Lagerhülse 5. Aufgrund der Spiralform der weiteren Führungsschlitze 11, 12 der Drehhülse 4 wird beim Verschieben des Eingriffsbolzen 17 entlang der Führungsschlitze 13, 14 und durch den gleichzeitigen Eingriff in die Führungsschlitze 11, 12 des Eingriffsbolzen 17 die Drehhülse 4 um einen entsprechenden Winkel dreht. Der Verdrehwinkel ergibt sich dabei aus dem schrägen Verlauf der Führungsschlitze 11, 12 relativ zu den Führungsschlitzen 13, 14.

Die Drehhülse 4 dient in diesem Zusammenhang als Verstellelement 3 für insbesondere einen Ventilkörpers eines in den Figuren nicht dargestellten Ventils. Insbesondere ein Einsteckende 47 der Drehhülse 4 ist mit einem entsprechenden mit dem Ventilkörper verbundenen Anschlusselement in Eingriff, so dass eine Drehung der Drehhülse 4 auf den Ventilkörper zum Öffnen oder Schließen des Ventils übertragbar ist.

In Fig. 3 ist ein Schnitt entlang der Linie III-III aus Fig. 2 dargestellt.

Die Federlagerhülse 34 umgibt im Wesentlichen vollständig die in ihrem Inneren angeordnete Lagerhülse 5 und Drehhülse 4. Im Bereich der Längsschlitze 39, 40 ist der Eingriffsbolzen 17 mit seinen Enden 35, 36 angeordnet, wobei die Enden 35, 36 flächenbündig zur Umgangsfläche der Federlagerhülse 34 angeordnet sind.

Lagerhülse 5 und Drehhülse 4 weisen einen kreisförmigen Querschnitt auf, der durch die entsprechenden Führungsschlitze 11, 12 und 13, 14 unterbrochen ist. In diesen Führungsschlitzen sind die entsprechenden Kugel-/Rollenlager 20 angeordnet, die an Endabschnitten 18, 19 des Eingriffsbolzen 17 befestigt sind. Ein Mittelabschnitt 21 des Eingriffsbolzen 17 ist im Vorschubelement 22 gehalten. Dieses weist zumindest teilweise einen kreisförmigen Querschnitt auf, wobei das Vorschubelement auf seinen den Kugel-/Rollenlager 20 zuweisenden Seiten abgeflacht ist.

Im Folgenden wird kurz die Funktionsweise der erfindungsgemäßen Drehverstellvorrichtung anhand der Figuren erläutert.

Mittels der Aktuatoreinrichtung 25 ist über deren Betätigungselement 24 das Vorschubelement 22 in Längsrichtung 15 der Drehverstellvorrichtung 1 verschiebbar. Beim Verschieben des Vorschubelements wird der von diesem gehaltene Eingriffsbolzen 17 entsprechend verschoben. Dessen Endabschnitte 18, 19 sind von Kugel-/Rollenlagem 20 umgeben und in Führungsschlitzen 11 bis 14 geführt. Die Führungsschlitze 11 und 12 in der Drehhülse 4 und die Führungsschlitze 13, 14 in der Lagerhülse 5 sind jeweils paarweise angeordnet, wobei Paare von Führungsschlitzen 11, 12; 13, 14 diametral gegenüberliegen. Die Führungsschlitze 11, 14 sind in Umfangsflächen 9, 10 der entsprechenden Hülsen 4, 5 ausgebildet. Dabei verlaufen die Führungsschlitze 13, 14 linear und im Wesentlichen parallel zur Längsrichtung 15 und die Führungsschlitze 11, 12 schräg zu den Führungsschlitzen 13, 14 und insbesondere spiralförmig. Beim Verschieben des Eingriffsbolzens 17 entlang der linearen Führungsschlitze 13, 14 wird durch den gleichzeitigen Eingriff in die spiralförmigen Führungsschlitze 11, 12 die Drehhülse 4 als Verstellelement 3 um die Längsrichtung 15 um einen bestimmten Winkel verdreht.

Die Drehhülse 4 ist als Verstellelement für einen Ventilkörper eines nicht dargestellten Ventils vorgesehen und eine entsprechende Verdrehung der Drehhülse wird in eine Verdrehung des Ventilkörpers und somit in ein Öffnen oder Schließen des Ventils umgesetzt.

Um eine Rückstellung des Verstellelements 3 in die in den Fig. 1 und 2 dargestellte Endstellung der Federlagerhülse 34 zu unterstützen, ist zwischen dem Ringflansch 30 des Abschlussrings 29 und dem Randflansch 37 der Federlagerhülse 34 eine Druckfeder 33 angeordnet. Dabei wird die Federlagerhülse 34 beim Verstellen des Eingriffsbolzens 17 in Richtung Abschlussring 29 von diesem mitgeführt, dessen Enden 35, 36 mit Schlitzenden 41, 42 der in der Federlagerhülse 34 ausgebildeten Längsschlitze 39, 40 in Anlage sind.

## Patentansprüche

1. Drehverstellvorrichtung (1), insbesondere für ein einen verschwenkbaren und verdrehbaren Ventilkörper aufweisendes Ventil, mit zumindest einer Betätigungseinrichtung (2) zum Verdrehen eines mit dem Ventilkörper bewegungsverbindbaren Verstellelements (3), welches als Drehhülse (4) ausgebildet ist, die relativ zu einer Lagerhülse (5) verdrehbar gelagert ist, und wobei die Betätigungseinrichtung (2) wenigstens ein eine Liniearbewegung in eine Drehbewegung umsetzendes Getriebe (6) aufweist,
**dadurch gekennzeichnet,**
**dass** an der Lagerhülse (5) einem Befestigungsende gegenüberliegend ein Abschlussring (29) mit radial auswärts vorstehendem Ringflansch (30) lösbar befestigt und zwischen Drehhülse (4) und Abschlussring (29) wenigstens ein Axiallager (31) zur Axialfixierung der Drehhülse relativ zur Lagerhülse (5) angeordnet ist.

2. Drehverstellvorrichtung nach Anspruch 1, **dadurch gekennzeichnet, dass** die Drehverstellvorrichtung (1) als Einbaumodul (7) ausgebildet ist.

3. Drehverstellvorrichtung nach Anspruch 1 oder 2, **dadurch gekennzeichnet, dass** die Drehhülse (4) innerhalb der Lagerhülse (5) zumindest verdrehbar gelagert ist.

4. Drehverstellvorrichtung nach einem der vorangehenden Ansprüche, **dadurch gekennzeichnet, dass** zwischen Drehhülse (4) und Lagerhülse (5) Kugel- und/oder Rollenlager (8) angeordnet sind.

5. Drehverstellvorrichtung nach einem der vorangehenden Ansprüche, **dadurch gekennzeichnet, dass** Drehhülse (4) und Lagerhülse (5) in ihren Umfangsflächen (9, 10) jeweils mindestens einen Führungsschlitz (11, 12, 13, 14) aufweisen, von denen einer im Wesentlichen gradlinig und der andere im Wesentlichen schräg zur Längsrichtung (15) der Hülsen (4, 5) verläuft, wobei mit beiden Schlitzen (11, 12, 13, 14) ein Eingriffselement (16) des Getriebes (6) in Eingriff ist.

6. Drehverstellvorrichtung nach einem der vorangehenden Ansprüche, **dadurch gekennzeichnet, dass** die Führungsschlitze (11, 12, 13, 14) in Drehhülse (4) und Lagerhülse (5) einander zuweisend in den Umfangsflächen (9, 10) von Drehhülse (4) und Lagerhülse (5) angeordnet sind.

7. Drehverstellvorrichtung nach einem der vorangehenden Ansprüche, **dadurch gekennzeichnet, dass** die Führungsschlitze (11, 12, 13, 14) paarweise in Drehhülse (4) und Lagerhülse (5) ausgebildet sind, wobei sich jedes Paar von Führungsschlitzen (11, 12; 13, 14) der jeweiligen Hülse (5) in den Umfangsflächen (9,10) diametral gegenüberliegt.

8. Drehverstellvorrichtung nach einem der vorangehenden Ansprüche, **dadurch gekennzeichnet, dass** die Führungsschlitze (11, 12, 13, 14) in Projektion auf die Längsrichtung (15) der Hülsen (4, 5) im Wesentlichen gleich lang sind.

9. Drehverstellvorrichtung nach einem der vorangehenden Ansprüche, **dadurch gekennzeichnet, dass** die Führungsschlitze (11, 12) in der Drehhülse (4) spiralförmig verlaufen.

10. Drehverstellvorrichtung nach einem der vorangehenden Ansprüche, **dadurch gekennzeichnet, dass** das Eingriffselement (16) ein quer zur Längsrichtung (15) verlaufender Eingriffsbolzen (17) ist.

11. Drehverstellvorrichtung nach einem der vorangehenden Ansprüche, **dadurch gekennzeichnet, dass** der Eingriffsbolzen (17) an seinen beiden Endabschnitten (18, 19) mit den paarweise gegenüberliegenden Führungsschlitzen (11, 12; 13, 14) sowohl in Drehhülse (4) als auch Lagerhülse (5) in Eingriff ist.

12. Drehverstellvorrichtung nach einem der vorangehenden Ansprüche, **dadurch gekennzeichnet, dass** der Eingriffsbolzen (17) im Bereich der Führungsschlitze (11, 12, 13, 14) von Kugel- und/oder Rollenlagern (20) umgeben ist.

13. Drehverstellvorrichtung nach einem der vorangehenden Ansprüche, **dadurch gekennzeichnet, dass** der Eingriffsbolzen (17) im Wesentlichen in seinem Mittelabschnitt (21) in einem Vorschubelement (22) drehfest gehalten ist, welches entlang einer Längsbohrung (23) der Drehhülse (4) verschiebbar gelagert ist.

14. Drehverstellvorrichtung nach einem der vorangehenden Ansprüche, **dadurch gekennzeichnet, dass** Vorschubelement (22) und Längsbohrung (23) einen zumindest teilweise kreisförmigen Querschnitt aufweisen.

15. Drehverstellvorrichtung nach einem der vorangehenden Ansprüche, **dadurch gekennzeichnet, dass** das Vorschubelement (22) mit einem Betätigungselement (24) einer Aktuatoreinrichtung (25) lösbar verbindbar ist.

16. Drehverstellvorrichtung nach einem der vorangehenden Ansprüche, **dadurch gekennzeichnet, dass** die Lagerhülse (5) einen radial auswärts vorstehenden Ringflansch (26) an zumindest einem Befestigungsende (27) aufweist, welches mit einem Anschlussende (28) der Aktuatoreinrichtung (25) lösbar verbindbar ist.

17. Drehverstellvorrichtung nach einem der vorangehenden Ansprüche, **dadurch gekennzeichnet, dass** wenigstens ein Axiallager (32) zwischen Ringflansch (26) der Lagerhülse (5) und Drehhülse (4) und/oder zwischen Anschlussende (28) der Aktuatoreinrichtung (25) und der Drehhülse (4) angeordnet ist.

18. Drehverstellvorrichtung nach einem der vorangehenden Ansprüche, **dadurch gekennzeichnet, dass** der Eingriffsbolzen (17) und/oder das Vorschubelement (22) in Richtung Ringflansch (26) der Lagerhülse (5) kraftbeaufschlagt sind.

19. Drehverstellvorrichtung nach einem der vorangehenden Ansprüche, **dadurch gekennzeichnet, dass** wenigstens ein Federelement (33) zur Kraftbeaufschlagung in oder an der Drehverstellvorrichtung (1) angeordnet ist.

20. Drehverstellvorrichtung nach einem der vorangehenden Ansprüche, **dadurch gekennzeichnet, dass** das Federelement (33) wirkungsmäßig zwischen Ringflansch (26, 30) und Eingriffsbolzen (17) angeordnet ist.

21. Drehverstellvorrichtung nach einem der vorangehenden Ansprüche, **dadurch gekennzeichnet, dass** eine Federlagerhülse (34) in Längsrichtung (15) auf der Lagerhülse (5) aufgesteckt ist, in welche Federlagerhülse die Enden (35, 36) des Eingriffsbolzen (17) eingreifen und welche einen radial auswärts vorstehenden. Randflansch (37) aufweist, zwischen dem und dem Ringflansch (30) des Abschlussrings (29) eine Druckfeder als Federelement (33) angeordnet ist.

22. Drehverstellvorrichtung nach einem der vorangehenden Ansprüche, **dadurch gekennzeichnet, dass** der Randflansch (37) in einer Endstellung (38) der Federlagerhülse (34) mit dem Ringflansch (26) der Lagerhülse (5) in Anlage ist.

23. Drehverstelivorrichtung nach einem der vorangehenden Ansprüche, **dadurch gekennzeichnet, dass** die Federlagerhülse (34) zwei in Richtung Randflansch (37) offene Längsschlitze (39, 40) aufweist, in welche die Enden (35, 36) des Eingriffsbolzens (70) eingreifen und welche mit den dem Randflansch gegenüberliegenden Schlitzenden (41, 42) in Anlage ist.

## Claims

1. Rotating regulating device (1), especially for a valve which has a pivoting or twisting valve body, with at least one activating device (2) to rotate an adjusting element (3) which is connected to and moves the valve body, which adjusting element (3) is a rotary sleeve (4) which is mounted so that it can rotate relative to a bearing sleeve (5), and the activating device (2) has at least one transmission (6) which translates a linear motion into a rotary motion **characterized in that** opposite an attaching end (27) a closing ring (29) with a ring flange (30) which extends outward radially is removably attached to the bearing sleeve (5) and between the rotary sleeve (4) and the closing ring (29) there is at least one thrust bearing (31) to axially fix the rotary sleeve relative to the bearing sleeve (5).

2. Rotary adjusting device in accordance with Claim 1, **characterized by the** fact that the rotary adjusting device (1) is designed as an installed module (7).

3. Rotating regulating device in accordance with Claim 1 or 2, **characterized by** the fact that the rotary sleeve (4) is mounted inside the bearing sleeve (5) so that it can at least rotate.

4. Rotating regulating device in accordance with one of the preceding claims, **characterized by the fact** that there are ball and/or roller bearings (8) between the rotary sleeve (4) and the bearing sleeve (5).

5. Rotating regulating device in accordance with one of the preceding claims, **characterized by** the fact that the rotary sleeve (4) and the bearing sleeve (5) each have at least one guide slot (11, 12, 13, 14) in their circumferential surfaces (9, 10), one of which runs essentially in a straight line and the other essentially diagonally to the longitudinal direction (15) of the sleeves (4, 5), and a meshing element (16) of the transmission (6) engages both slots (11, 12, 13, 14).

6. Rotating regulating device in accordance with one of the preceding claims, **characterized by the fact** that the guide slots (11, 12,13,14) in the rotary sleeve (4) and bearing sleeve (5) are arranged facing each other in the circumferential surfaces (9, 10) of the rotary sleeve (4) and bearing sleeve (5).

7. Rotating regulating device in accordance with one of the preceding claims, **characterized by** the fact that the guide slots (11,1, 13, 14) are formed in pairs in the rotary sleeve (4) and bearing sleeve (5), and each pair of guide slots (11,12; 13, 14) in the respective sleeve (5) lie diametrically opposite each other in the circumferential surfaces (9, 10).

8. Rotating regulating device in accordance with one of the preceding claims, **characterized by** the fact that the guide slots (11,12,13,14) are essentially the same length when projected on the longitudinal direction (15) of the sleeves (4, 5).

9. Rotating regulating device in accordance with one of the preceding claims, **characterized by** the fact that the guide slots (11, 12) run in a spiral pattern in the rotary sleeve (4).

10. Rotating regulating device in accordance with one of the preceding claims, **characterized by** the fact that the meshing element (16) is a meshing pin (17) which runs perpendicular to the longitudinal direction (15).

11. Rotating regulating device in accordance with one of the preceding claims, **characterized by** the fact that both end sections (18, 19) of the meshing pin (17) engage the guide slots (11, 12; 13, 14), which lie opposite each other, in both the rotary sleeve (4) and the bearing sleeve (5).

12. Rotating regulating device in accordance with one of the preceding claims, **characterized by** the fact that the meshing pin (17) is encircled by ball and/or rotary bearings (20) in the area of the guide slots (11, 12, 13, 14).

13. Rotating regulating device in accordance with one of the preceding claims, **characterized by** the fact that the meshing pin (17) is held essentially in its middle section (21) so that it cannot turn, in a feed element (22) which is mounted so that it can be moved along a longitudinal bore (23) in the rotary sleeve (4).

14. Rotating regulating device in accordance with one of the preceding claims, **characterized by** the fact that the feed element (22) and longitudinal bore (23) have at least in part a circular cross section.

15. Rotating regulating device in accordance with one of the preceding claims, **characterized by** the fact that the feed element (22) can be removably connected to an activating element (24) of an actuator device (25).

16. Rotating regulating device in accordance with one of the preceding claims, **characterized by** the fact that the bearing sleeve (5) has a ring flange (26) extending outward radially on at least one attaching end (27), which can be removably connected to a connecting end (28) of the actuator device (25).

17. Rotating regulating device in accordance with one of the preceding claims, **characterized by** the fact that there is at least one thrust bearing (32) between the ring flange (26) of the bearing sleeve (5) and the rotary sleeve(4) and/or between the connecting end (28) of the actuator device (25) and the rotary sleeve (4).

18. Rotating regulating device in accordance with one of the preceding claims, **characterized by** the fact that the meshing pin (17) and/or the feed element (22) is subjected to force in the direction of the ring flange (26) of the bearing sleeve (5).

19. Rotating regulating device in accordance with one of the preceding claims, **characterized by** the fact that there is at least one spring element (33) located in or on the rotary adjusting device (1) to apply force.

20. Rotating regulating device in accordance with one of the preceding claims, **characterized by** the fact that the spring element (23) is located and operates between the ring flange (26, 30) and the meshing pin (17).

21. Rotating regulating device in accordance with one of the preceding claims, **characterized by the fact** that a spring bearing sleeve (34) is placed in the longitudinal direction (15) on the bearing sleeve (5), which spring bearing sleeve is engaged by the ends (35, 36) of the meshing pin (17), and which has a terminating flange (37) which extends outward radially, between which terminating flange and the ring flange (30) of the closing ring (29) there is a compression spring as spring element (33).

22. Rotating regulating device in accordance with one of the preceding claims, **characterized by** the fact that the terminating flange (37) is in contact with the ring flange (26) of the bearing sleeve (5) in one end position (38) of the spring bearing sleeve (34).

23. Rotating regulating device in accordance with one of the preceding claims, **characterized by** the fact that the spring bearing sleeve (34) has two longitudinal slots (39, 40) which are open in the direction of the terminating flange (37) which are engaged by the ends (35, 36) of the meshing pin (70) and which is in contact with the slot ends (41, 42) which are opposite the terminating flange.

## Revendications

1. Dispositif de réglage à rotation (1), en particulier pour une vanne comportant un corps de vanne pivotant et tournant, avec au moins un dispositif d'actionnement (2) pour la rotation d'un élément de réglage (3) pouvant être relié en déplacement au corps de vanne et qui est réalisé sous la forme d'une douille rotative (4) qui est montée de manière à pouvoir tourner par rapport à une douille d'appui (5), et le dispositif d'actionnement (2) comportant au moins une transmission (6) convertissant un mouvement linéaire en un mouvement de rotation,
**caractérisé**
**en ce que** sur la douille d'appui (5), face à une extrémité de fixation, est fixée de manière séparable une bague de terminaison (29) avec bride annulaire (30) faisant saillie radialement vers l'extérieur, et entre la douille rotative (4) et la bague de terminaison (29) est disposé au moins un palier axial (31) pour la fixation axiale de la douille rotative par rapport à la douille d'appui (5).

2. Dispositif de réglage à rotation selon la revendication 1, **caractérisé en ce que** le dispositif de réglage à rotation (1) est réalisé sous la forme d'un module intégré (7).

3. Dispositif de réglage à rotation selon la revendication 1 ou 2, **caractérisé en ce que** la douille rotative (4) est montée de manière à pouvoir au moins tourner à l'intérieur de la douille d'appui (5).

4. Dispositif de réglage à rotation selon l'une des revendications précédentes, **caractérisé en ce que** des roulements à billes et/ou à rouleaux (8) sont disposés entre la douille rotative (4) et la douille d'appui (5).

5. Dispositif de réglage à rotation selon l'une des revendications précédentes, **caractérisé en ce que** la douille rotative (4) et la douille d'appui (5) présentent dans chacune de leurs surfaces périphériques (9, 10) au moins une fente de guidage (11, 12, 13, 14) dont une s'étend sensiblement en ligne droite et l'autre sensiblement obliquement par rapport à la direction longitudinale (15) des douilles (4, 5), un élément de prise (16) de la transmission (6) étant en prise avec les deux fentes (11, 12, 13, 14).

6. Dispositif de réglage à rotation selon l'une des revendications précédentes, **caractérisé en ce que** les fentes de guidage (11, 12, 13, 14) sont disposées dans la douille rotative (4) et la douille d'appui (5) tournées les unes vers les autres dans les surfaces périphériques (9, 10) de la douille rotative (4) et de la douille d'appui (5).

7. Dispositif de réglage à rotation selon l'une des revendications précédentes, **caractérisé en ce que** les fentes de guidage (11, 12, 13, 14) sont réalisées deux par deux dans la douille rotative (4) et la douille d'appui (5), chaque paire de fentes de guidage (11, 12 ; 13, 14) étant diamétralement opposée à la douille (5) respective dans les surfaces périphériques (9, 10).

8. Dispositif de réglage à rotation selon l'une des revendications précédentes, **caractérisé en ce que** les fentes de guidage (11, 12, 13, 14) présentent sensiblement la même longueur en projection sur la direction longitudinale (15) des douilles (4, 5).

9. Dispositif de réglage à rotation selon l'une des revendications précédentes, **caractérisé en ce que** les fentes de guidage (11, 12) s'étendent en spirale dans la douille rotative (4).

10. Dispositif de réglage à rotation selon l'une des revendications précédentes, **caractérisé en ce que** l'élément de prise (16) est une tige de prise (17) s'étendant transversalement à la direction longitudinale (15).

11. Dispositif de réglage à rotation selon l'une des revendications précédentes, **caractérisé en ce que** la tige de prise (17) est en prise dans ses deux segments d'extrémité (18, 19) avec les fentes de guidage (11, 12 ; 13, 14) opposées deux par deux aussi bien dans la douille rotative (4) que dans la douille d'appui (5).

12. Dispositif de réglage à rotation selon l'une des revendications précédentes, **caractérisé en ce que** la tige de prise (17) est entourée dans la zone des fentes de guidage (11, 12, 13, 14) par des roulements à billes et/ou à rouleaux (20).

13. Dispositif de réglage à rotation selon l'une des revendications précédentes, **caractérisé en ce que** la tige de prise (17) est maintenue solidairement en rotation sensiblement dans son segment central (21) dans un élément d'avance (22) qui est monté de manière à pouvoir coulisser le long d'un perçage longitudinal (23) de la douille rotative (4).

14. Dispositif de réglage à rotation selon l'une des revendications précédentes, **caractérisé en ce que** l'élément d'avance (22) et le perçage longitudinal (23) présentent une section transversale au moins en partie circulaire.

15. Dispositif de réglage à rotation selon l'une des revendications précédentes, **caractérisé en ce que** l'élément d'avance (22) peut être relié de manière séparable à un élément d'actionnement (24) d'un dispositif à actionneur (25).

16. Dispositif de réglage à rotation selon l'une des revendications précédentes, **caractérisé en ce que** la douille d'appui (5) comporte une bride annulaire (26) faisant saillie radialement vers l'extérieur, à au moins une extrémité de fixation (27) qui peut être reliée de manière séparable à une extrémité de raccordement (28) du dispositif à actionneur (25).

17. Dispositif de réglage à rotation selon l'une des revendications précédentes, **caractérisé en ce qu'**au moins un palier axial (32) est disposé entre la bride annulaire (25) de la douille d'appui (5) et la douille rotative (4) et/ou entre l'extrémité de raccordement (28) du dispositif à actionneur (25) et la douille rotative (4).

18. Dispositif de réglage à rotation selon l'une des revendications précédentes, **caractérisé en ce que** la tige de prise (17) et/ou l'élément d'avance (22) sont soumis à l'action d'une force en direction de la bride annulaire (26) de la douille d'appui (5).

19. Dispositif de réglage à rotation selon l'une des revendications précédentes, **caractérisé en ce qu'**au moins un élément à ressort (33) est disposé dans ou sur le dispositif de réglage à rotation (1) pour exercer une force.

20. Dispositif de réglage à rotation selon l'une des revendications précédentes, **caractérisé en ce que** l'élément à ressort (33) est disposé de manière active entre la bride annulaire (26, 30) et la tige de prise (17) .

21. Dispositif de réglage à rotation selon l'une des revendications précédentes, **caractérisé en ce qu'**une douille d'appui de ressort (34) est emboîtée dans la direction longitudinale (15) sur la douille d'appui (5) dans laquelle douille d'appui de ressort s'engagent les extrémités (35, 36) de la tige de prise (17) et qui présente une bride de bordure (37) faisant saillie radialement vers l'extérieur entre laquelle et la bride annulaire (30) de la bague de terminaison (29) est disposé un ressort de pression servant d'élément à ressort (33).

22. Dispositif de réglage à rotation selon l'une des revendications précédentes, **caractérisé en ce que** la bride de bordure (37) est en contact, dans une position de fin de course (38) de la douille d'appui de ressort (34), avec la bride annulaire (26) de la douille d'appui (5).

23. Dispositif de réglage à rotation selon l'une des revendications précédentes, **caractérisé en ce que** la douille d'appui de ressort (34) comporte deux fentes longitudinales (39, 40) ouvertes en direction de la bride de bordure (37), dans lesquelles s'engagent les extrémités (35, 36) de la tige de prise (70) et qui sont en contact avec les extrémités de fente (41, 42) opposées à la bride de bordure.
